# EUROPEAN PATENT APPLICATION

(11) **EP 1 029 564 A1**
(43) Date of publication of application: **23.08.2000**
(21) Application number: 00103530.2
(22) Date of filing: 18.02.2000
(51) Int. Cl.: A63C 17/26, G01P 3/54

(54) **Recreational vehicle**

(30) Priority: 19.02.1999 JP 4110899
(71) Applicant: OMRON CORPORATION, Kyoto-shi, Kyoto 616-8025 (JP); K2 Japan Corporation, Tokyo 103-0007 (JP); Micro Talk Systems Corporation, Chiyoda-ku, Tokyo 101-0025 (JP)
(72) Inventor: Kawamoto, Ryuji, c/o Omron Corporation, Kyoto-shi, Kyoto 616-8025 (JP); Yagi, Takahide, c/o Omron Corporation, Kyoto-shi, Kyoto 616-8025 (JP); Matsunaga, Koji, c/o K2 Japan Corporation, Tokyo 151-0053 (JP); Kitamura, Shigeo, c/o Micro Talk Systems Corp., Chiyoda-ku, Tokyo 101-0025 (JP)
(74) Representative: WILHELMS, KILIAN & PARTNER Patentanwälte

(57) **Abstract**

A recreational vehicle not requiring battery replacement nor charging operations. Wherein a permanent magnet 8 is embedded in a wheel 5. An induced electromotive force occurs in a coil 21 due to a rotating magnetic field, which is generated in accordance with the rotation of the wheel 5 and the permanent magnet 8. This AC electromotive force being rectified by a rectifier circuit 33, the resultant power being accumulated in a capacitor 23, and this voltage being utilized as a power source voltage for a detecting transmitter 9.

## Description

### BACKGROUND OF THE INVENTION

### Field of the Invention:

This invention relates to a recreational vehicle, such as an in-line skate and the like, adapted to detect a rotational frequency of a wheel and display the same.

### Description of the Prior Art:

In recent years, in-line skates provided with a plurality of wheels, for example four wheels, on a lower portion of a shoe body and rolling on a street; a road, a floor and the like have been spreading widely. Among the in-line skates of this kind, an in-line skate provided on a shoe body thereof with a transmitter, and a detector-containing electronic circuit, and adapted to detect a rotational frequency of a wheel, transmit the rotational frequency to a wrist watch type receiver wirelessly, and display on the receiver a total rotational frequency (distance traveled) or a traveling speed calculated on the basis of the rotational frequency has been proposed (USP No. 5721539).

In the conventional in-line skate as described above, an electronic circuit is provided on the skate shoe body, and a battery (cell) is mounted thereon as a power source for the electronic circuit. However, when a battery is used as the power source, it has to be replaced or charged frequently. This makes it necessary to provide a simple structure for storing a battery therein so that the battery can be easily replaced, or a customized charger is necessary

### SUMMARY OF THE INVENTION

The present invention has been developed with attention paid to these problems, and aims at providing a recreational vehicle requiring neither the replacement nor the charging of a battery.

The recreational vehicle according to the present invention is a recreation vehicle having an electronic circuit adapted to detect a rotational frequency of a wheel and transmit at least the rotational frequency or data obtained in connection therewith to the outside. Wherein a generating means adapted to generate electric energy in response to the rotation of the wheels is provided. Voltage generated by this generating means being utilized as a power source voltage for the electronic circuit.

The generating means comprises, for example, at least one magnet provided on a wheel, and at least one coil provided on the vehicle body. When the wheels are rotated by a vehicle traveling force, the magnet is also rotated, so that an electromotive force occurs in the coil due to the magnetic induction effect. This electromotive force is utilized as a power source voltage for the electronic circuit.

### BRIEF DESCRIPTION OF THE DRAWINGS

Fig. 1 is a drawing showing the first embodiment of the in-line skate according to the present invention;
Fig. 2 is a sectional view of the first embodiment of the in-line skate of Fig. 1 taken along the line A-A' therein;
Fig. 3 is a partially sectioned side view of the portion of the in-line skate which is on the lower side of the line A-A';
Fig. 4 is a block diagram showing the construction of a detecting transmitter circuit of the same embodiment of the in-line skate; and
Fig. 5 is a block diagram showing the construction of a receiving display circuit of the same embodiment of the in-line skate.

### DESCRIPTION OF THE PREFERRED EMBODIMENT

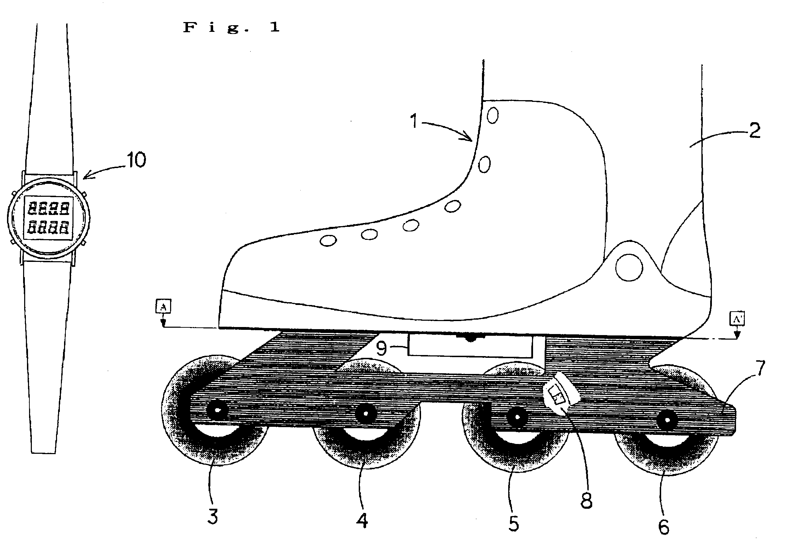

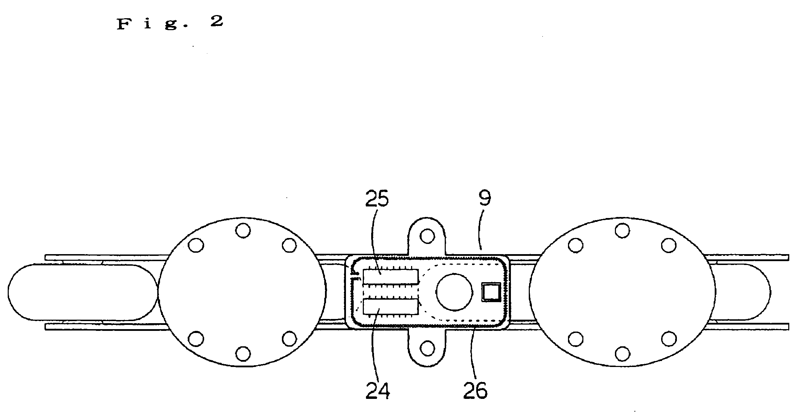

The present invention will now be described in more detail with reference to the first embodiment thereof. Fig. 1 is a drawing showing the construction of the first embodiment, an in-line skate, according to the present invention. An in-line skate 1 of this embodiment is provided with a shoe 2, wheels 3, 4, 5, 6, a frame 7 supporting these wheels thereon, a permanent magnet 8 embedded in the wheel 5, a detecting transmitter 9, and a wrist watch type receiving display 10. In this embodiment, the shoe 2, wheels 3, 4, 5, 6 and frame 7 are not greatly different from those of a conventional in-line skate. The permanent magnet 8 is molded together with an elastic portion of the wheel 5, and magnetized in the circumferential direction thereof. The permanent magnet may, of course, be embedded not only in the wheel 5 but also in any other one of the wheels 3, 4, 6, or in a plurality of these wheels. When using the in-line skate, the receiving display 10 is worn on the arm. The permanent magnet 8 generates a rotating magnetic field as the user travels on the in-line skate. The detecting transmitter 9 is fixed to the sole portion of the skate shoe 2 which is above the wheel. Although the detecting transmitter 9 shown in the drawings is fixed to the skate shoe 2, it may also be fixed to the frame 7. The detecting transmitter 9 is fastened to the skate shoe 2 or frame 7 by, for example, something like a screw so that the former can be removed easily from the latter. A sectional view taken along the line A-A' in Fig. 1 is shown in Fig. 2.

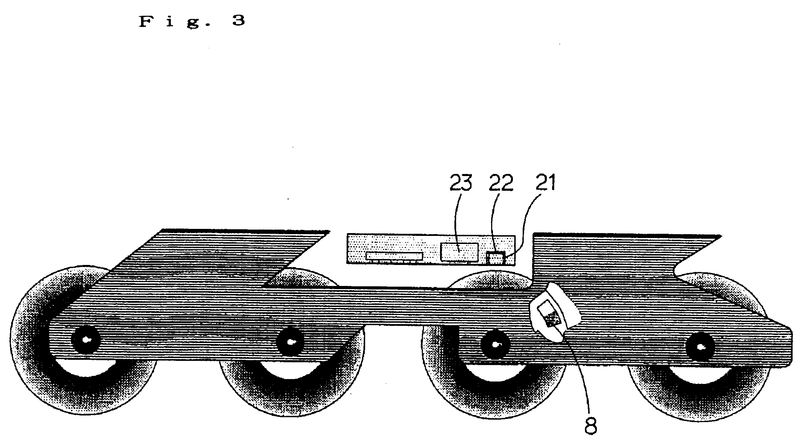

Fig. 3 is a side view of the portion of the in-line skate which is on the lower side of the line A-A', in which the detecting transmitter 9 alone is shown in a sectional view.

The main constituent elements of the detecting transmitter 9 are a coil 21, a back yoke 22, a capacitor 23, a microcomputer 24, a transmitter 25, an antenna 26 and a printed circuit board (not shown) as shown in Fig. 2 and 3. Up to all of the hollow space in the casing for the detecting transmitter 9 is filled with a resin to be formed into a solidly sealed structure, which has excellent water, vibration, and impact resisting performance.

The coil 21 is provided above the wheel 5 and the magnet 9 to effectively receive a magnetic field. Due to the rotating magnetic field generated by the permanent magnet 8 embedded in the wheel, a magnetic flux passing the inner side of the coil 21 varies, and an induced electromotive force occurs at both ends thereof. The back yoke 22 is formed of a soft magnetic material, and the magnetic flux forms a magnetic path extending from the permanent magnet 8, passing the inner side of the coil 21 and returning to the permanent magnet 8 and contributes to the improvement of a generating efficiency. The capacitor 23 stores the generated electric power.

The microcomputer 24 is adapted to control the charging and discharging of the capacitor 23, digitize the rotation information obtained by the coil 21, and deliver the resultant information to the transmitter 25. During this time, an identification code set exclusively for the specific receiving display 10 is added to this information. The transmitter 25 modulates a digital signal to an electric wave signal in the bandwidth of 100 MHz-1GHz, and transmits the resultant signal through the antenna 26.

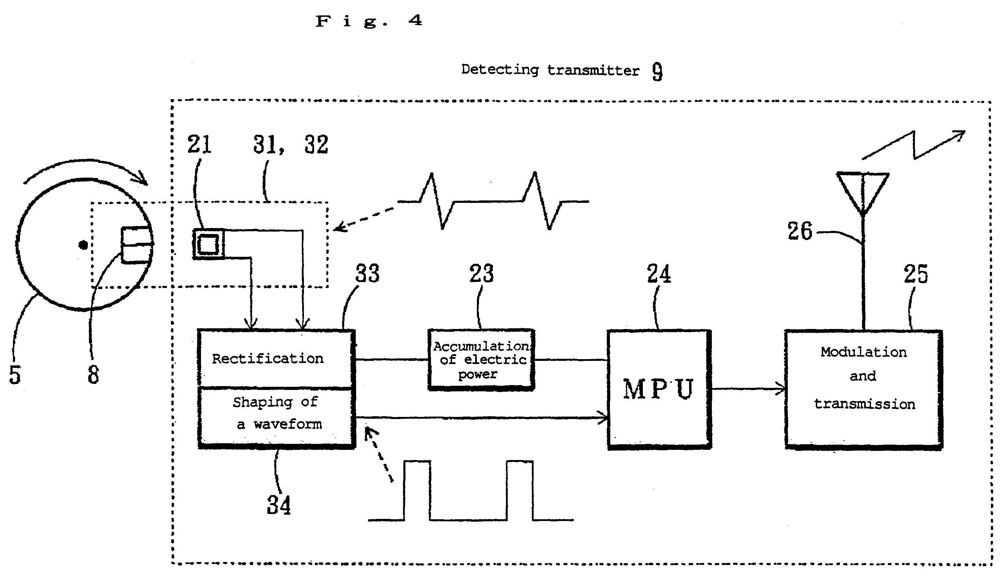

Fig. 4 is a block diagram showing the construction of a the detecting transmitter circuit 9. Both a detecting portion 31 and a generating portion 32 are comprised of the permanent magnet 8 and coil 21. Since voltages induced at both ends of the coil 21 are AC voltages, they are converted into DC voltages in a rectifier 33, and then sent to the capacitor 23. These voltages are converted into pulse signals in a waveform shaper 34. All of the electric power consumed by the detecting transmitter 9 is the electric power discharged from and supplied by the capacitor 23.

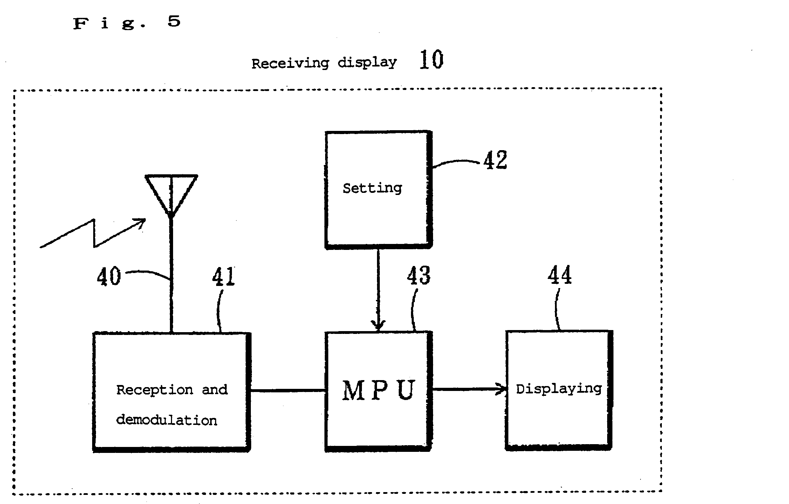

Fig. 5 is a block diagram of the receiving display 10. An antenna 40 on the receiving side amplifies an electric wave signal and transmits the same to a receiver 41. The receiver 41 modulates the electric wave signal, and sends out a digital signal to a microcomputer 43. The user sets his physical information (stature and weight), diameter of the wheel and other information to be displayed (distance, speed and calorie consumption) by a input device 42. When a signal is sent from the matching detecting transmitter, the microcomputer 43 computes a distance traveled and a speed on the basis of the rotation information on the wheels obtained from the receiver 41 and the diameter of the wheel obtained from the input device 42. The microcomputer further computes in addition to the distance traveled and speed the user's calorie consumption on the basis of his physical information obtained from the input device 42. Out of the computed information, the information selected by the input device 42 is outputted to a display 44. The display is a LCD, and adapted to display information visually. The display 44 may also be formed of a loudspeaker, and adapted to transmit information acoustically to the user.

According to the present invention, the recreational vehicle is provided with a generating means for generating electric energy in accordance with the rotation of the wheel, and utilizes a voltage generated by this generating means as a power source voltage for the electronic circuit. Therefore, a battery is not necessary, and the battery replacement and charging labor can be omitted. Since the battery replacement work is not carried out, the electronic circuits as a whole can be sealed and reliably protected.

## Claims

1. A recreational vehicle having an electronic circuit adapted to detect a rotational frequency of a wheel (5, 105), and transmit at least the rotational frequency or data obtained in relation thereto to the outside, wherein:
a generating means (32) for generating electric energy in response to the rotation of said wheel is provided, a voltage generated by said generating means (32) being utilized as a power source voltage for said electronic circuit.

2. A recreational vehicle according to Claim 1, wherein said electronic circuit and generating means (32) are provided on a vehicle body, a receiver (10) having a display means (44) for displaying thereon a rotational frequency transmitted from said vehicle body or data obtained in relation to said rotational frequency being provided.

3. A recreational vehicle according to Claim 1 or 2, wherein an input means (42) for setting at least a diameter of said wheel (5, 105) and a user's physical information, and a means (43) for computing the user's calorie consumption on the basis of the information set by said input means (42) and a detected rotational frequency are provided.

4. A recreational vehicle according to Claim 1,2 or 3, wherein said generating means (32) comprises at least one magnet (8) provided on at least one wheel (5, 105), at least one coil (21) provided on said vehicle body, and the electric energy being generated by an electromagnetically induced electromotive force occuring between said magnet (8) and coil (21).

5. A recreational vehicle according to Claim 4, wherein said magnet (8) is embedded in said wheel (5, 105), molded together with an elastic portion thereof and magnetized in the rotational direction of said wheel (5, 105).

6. A recreational vehicle according to Claim 4 or 5, wherein said coil (21) of said generating means (32) is used also as a rotational frequency detecting coil (21).

7. A recreational vehicle according to Claim 2, 3, 4, 5 or 6, wherein a transmitting means of said electronic circuit is adapted to synthesize the detected data and an identification code and transmit the synthesized data, said receiver (10) being adapted to check said transmitted identification code and discriminate the same from others.

8. A recreational vehicle according to Claim 1, 2, 3, 4, 5, 6 or 7, wherein said electronic circuit is housed in a casing, a hollow space inside of which is filled with a resin to solidly fix constituent members of said electronic circuit.

9. A recreational vehicle according to Claim 1, 2, 3, 4, 5, 6, 7 or 8, wherein said recreational vehicle is an in-line skate.
